# EUROPEAN PATENT SPECIFICATION

(11) **EP 0 963 268 B1**
(45) Date of publication and mention of the grant of the patent: **04.09.2002**
(21) Application number: 97951414.8
(22) Date of filing: 19.12.1997
(51) Int. Cl.: B23B 31/30

(54) **HYDRAULIC PRECISION MANDREL**
PRÄZISIONSHYDRAULIKFUTTER
MANDRIN HYDRAULIQUE DE PRECISION

(30) Priority: 28.01.1997 SE 9700236
(43) Date of publication of application: 15.12.1999
(73) Proprietor: ETP TRANSMISSION AB, 581 11 Linköping (SE)
(72) Inventor: SAMELIUS, Anders, ETP Transmission AB, S-581 11 Linköping (SE); ROSBERG, Niclas, ETP Transmission AB, S-581 11 Linköping (SE)
(74) Representative: Avellan-Hultman, Olle
(86) International application number: SE9702195
(87) International publication number: WO98032562

(56) References cited:
- WO-A-95/29029
- US-A- 5 174 585

## Description

The present invention generally relates to a mandrel which is preferably arranged for being mounted, with one end thereof, in a rotary machine tool, for instance in a lathe machine, a milling machine, a drilling machine etc. The mandrel can, alternatively and as desired, be releasably or fixedly mounted in the machine tool. In case the mandrel is of a releasable type it is mounted for instance by means of a mandrel cone part. The opposite end of the mandrel, for instance the free end thereof, should be formed for keeping one or more working tools or work pieces releasably secured thereon.

Various types of mandrels of said general type are known in the art. Such known mandrels generally are formed so that one or more of the exchangeable tools are secured in the direction of rotation of the mandrel by mechanical means like keys, splines and similar means, or by a heat press joint, and, in the direction for avoiding axial displacement, by means of nuts or screws. Such mechanical locking means do not give a perfect precision, and they may present radial play for the working tool, and it may often be difficult to provide a perfect centering of the mandrel with the tool, what in turn can give rise to unsatisfactory balancing and vibrations in the working tool and the tool machine depending thereon. It may also often be a difficult and time consuming operation to release the joint between the mandrel and the tools, especially in case the tools are mounted by heat press joints.

WO 95/29029 shows a hydraulic bushing with axially displaceable pressurizing means to clamp a tool.

The present invention is intended to solve the above mentioned problems and disadvantages and to provide a precision mandrel for use in rotary machine tools, and which has, at its free end, a clamp body (mandrel arbor), which is designed so that one or more tools can be slidingly moved onto said arbor and can be secured thereon without the use of keys, splines and other mechanical locking means, which may be provided on the envelope surface of the clamp body, or without press joints, and in which a prefect centering and a perfect balancing of the tool or tools is obtained.

According to the invention said problem is solved by the subject matter of claim 1.

For providing a safe rotary locking of the tools on the mandrel the tool or tools, which are mounted closest to a transition part of the mandrel arranged between the two ends of the mandrel, can be formed with a couple of follower pins arranged to engage corresponding follower bores of the transition part.

For security reasons, for instance in case the operator happens to forget to activate the hydraulic system, the mandrel can be formed with a security ring, for instance a clamp ring formed with a rubber spring, which ring can be screw connected to the end of the clamp body, and which security ring foresees that the tool or tools engage the transition part before the hydraulic pressure medium is pressurized. The security ring can be connected to the clamp body by means of a screw which is threaded into the clamp body, or the tool or tools can be formed with through bores for connection screws which can be secured in threaded bores of the transition part. It is, however, important that the tool should not be allowed to be finally locked by means of mechanical forces, but that the tool should be centered and clamp connected by hydraulic means.

For providing a pressurization of the pressure medium gap the clamp body (the expandable arbor) can be formed with a central bore having a pressure piston mounted therein, which defines a pressure chamber which, over one or more cross channels is connected to the pressure medium gap, and in which the pressure medium of said chamber can be actuated by a piston which can be tightened by means of a wrench extending through the security means and through the bore of the clamp body, for instance a hexagon spanner, which directly engages the pressurization piston, and which co-operates with inner threads of the central bore of the clamp body.

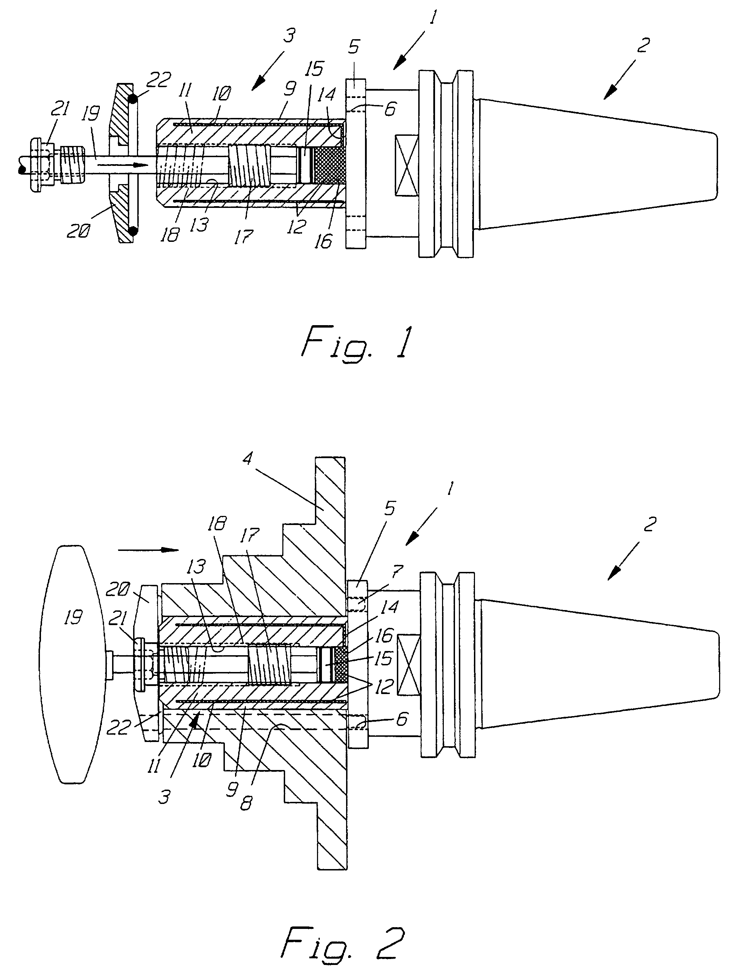

Now the invention is to be described more closely with reference to the accompanying drawings, in which figure 1 discloses a hydraulic precision mandrel according to an embodiment of the invention in a partly cut open state before the tool has been mounted. Figure 2 correspondingly shows the hydraulic mandrel after one or more tools have been mounted on the clamp body and while the hydraulic pressure medium of the pressure medium gap is being pressurized.

The hydraulic mandrel shown in the drawings generally comprises a transition part 1 provided between the two ends of the mandrel, a mandrel cone part 2 for engagement in a corresponding conical bore of a rotary tool machine and a mandrel arbor or clamp body 3 for releasably connecting one or more tools 4 and securing same on the clamp body 3. The transition part 1, the cone 2 and the clamp body 3 provides an integral unity.

The transition part 1 and the mandrel cone 2 are of a type which is known per se and need not be described in detail. The cone is adapted for being introduced in a correspondingly conically formed cavity of a rotary machine tool, for instance a lathe machine, a milling machine, a drilling machine etc.

For making it possible to connect one or more rotary tools 4 on the mandrel the clamp body (expandable arbor) is formed with a smooth cylindrical outer surface. If wanted said outer surface can be formed with different (stepped) diameters for centering and clamp connecting tools/work pieces having different fitting diameters. The tools 4 are slided into contact with a projecting flange 5 of the transition part 1. Said flange 5 can be formed with a pair of bores 6 in which follower pins 7 of the tool located closest to the flange 5 can engage for providing a rotary engagement of the tools. Alternatively the tools can have through bores 8 (see the lower part of figure 2) through which clamp screws can be introduced and can be threaded into the bores 6 of the flange 5.

The clamp body 3 is formed as a hydraulic clamp bushing, and to that end it has a relatively thin, radially outwards expandable outer wall 9 and an all around extending narrow gap 10 facing the radially inner thereof located supporting body 11, which gap 10 is filled with a hydraulic pressure medium 12, which upon pressurization of the pressure medium makes said outer wall 9 expand radially outwards thereby centering, balancing and clamp connecting the tool or tools 4 which have been slided onto the clamp body 3.

For making it possible to pressurize the pressure medium 12 of the gap 10 the clamp body is formed with an axial bore 13 which, at the inner end thereof, has one or more cross channels 14 opening into the pressure medium gap 10. At the inner end of the axial bore 13 of the arbor 3 there is a displaceable piston 15 defining a pressure chamber 16, which is filled with a pressure medium 12. At the axially outer end the piston 15 has a pushing means 17 which co-operates with inner threads 18 of the bore 13. The pusher means 17 has an inner connection bore for a wrench 19, for instance a hexagonal wrench of T-handle type. When the pusher 17 and thereby also the pressure piston 15 is tightened by means of the wrench 19 pressure medium is forced from the pressure medium chamber 16, through the cross channel 14 and into the all around extending pressure medium gap 10 thereby providing a radial expansion of the outer wall 9 and a centering and clamp connecting of the tools 4 on the clamp body 3. When untightening the pusher means 17 the outer wall 9 regains its non-expanded shape and the tools 4 become released.

For providing an accurate connection of the tools, and for eliminating any type of wobbling thereof it is important that the tools are pressed against the flange 5 of the transition part 1, and to that end the apparatus comprising a pressure ring 20 which can be screwed into contact with the end of the clamp body 3 by means of a tap screw 21 which engages inner threads 18 of the mandrel bore 13, and which with the head thereof forces the pressure ring 20 in the direction towards the transition part 1. The pressure ring 20 preferably can have a rubber spring 22 enclosed therein for providing a resilient forcing of the tools 4 against the flange 5. Both the pressure ring 20 and the screw 21 are formed with axial through bores, so that the wrench 19 can be introduced in the pusher means 17 thereby providing a pressurization and a pressure releasing, respectively, of the hydraulic pressure medium of the pressure medium gap 10.

The mounting of the tools is simply made in that it is firstly foreseen that the pressure medium gap 10 of the clamp body 3 is released from pressure; one or more tools and slided onto the clamp body 3 and into contact with the flange 5 of the transition part 1, and so that the follower pins 7 engage the corresponding bores 6 of said flange 5; the pressure ring 20 is tightened by means of the tap screw 21, so that the tools are resiliently pressed against the flange 5 by the action of the rubber spring 22; a wrench 19 is introduced through the bore of the screw 21 and the pressure ring 20 and into the wrench receiving bore of the pusher means 17, and said pusher means is tightened by a certain force, whereupon the tools are centered and clamp connected by the thin outer wall 9.

The releasing of the tool/tools follows in the opposite order.

As mentioned above the pressure ring can alternatively be screw connected by means of two of more tap screws extending axially therethrough the pressure ring 10 and through the tools, and which can be threaded into the bores 6 of the flange 5.

### REFERENCE NUMERALS

- 1: transition part
- 2: mandrel cone
- 3: clamp body
- 4: tool/tools
- 5: flange
- 6: bore (of the flange)
- 7: follower pin
- 8: bore (of the tool/tools)
- 9: outer wall
- 10: gap
- 11: supporting body
- 12: pressure medium
- 13: axial bore
- 14: cross channel
- 15: pressure piston
- 16: pressure chamber
- 17: pusher means
- 18: threads
- 19: wrench with handle
- 20: pressure ring
- 21: screw
- 22: rubber spring

## Claims

1. Mandrel apparatus for making it possible to clamp tools (4) in rotary machine tools and comprising an integral unit formed with means for mounting the apparatus with one and thereof in the machine tool, a transition part (1) and a clamp body (3) for clamp connecting said tool (4), wherein
- the apparatus is formed as a mandrel, in which the clamp body (3) is formed as a hydraulic clamp bushing having a thin, smooth wall (9) and a solid mandrel body (11), and a gap (10) provided between said thin outer wall (9) and the mandrel body (11), which gap is filled with a hydraulic pressure medium (12) which, when pressurized, makes the outer wall (9) expand radially outwards thereby clamp connecting said tool or tools (4),
- the mandrel body (11) at the interior thereof is formed with means (15, 17) for pressurization of the pressure medium (12) in the pressure medium gap (10) and comprising an axial, central bore (13) in the mandrel body (11) which contains a pressure piston (15) defining a pressure medium chamber (16) which is filled with pressure medium (12), and which communicates which the pressure medium gap (10) of the clamp body (3) over one or more cross channels (14) at a place close to the mandrel body bore (13),
- and the pressure piston (15) is arranged for being actuated by a pusher means (17) which is arranged for displacing the piston (15) inwards or outwards in the mandrel body bore (13) for pressurizing and for releasing the pressure, respectively, of the pressure medium in the all around extending pressure medium gap (10),
**characterized in that**
- the smooth wall (9) is an outer wall (9) onto the outer surface of which one or more tools can be slided and can be secured
- the mandrel body (11) is an inner solid mandrel body (11) wherein the central bore (13) can be reached from the free end of the apparatus and
- the pusher means can be reached from outside the apparatus through the free end of the clamp body (3).

2. Mandrel apparatus according to claim 1, **characterized in that** the pusher means is a rotatable piston (15, 17) which is threaded and engages inner threads (18) of the mandrel body bore (13) and which is formed with a coupling bore for engagement of a wrench (19) adapted to be introduced through the end of mandrel body bore (13) and used for tightening an untightening, respectively, of the piston (15, 17).

3. Mandrel apparatus according to claim 1 or 2, **characterized in that** the transition part (1) has a radial flange (5) at the connection end for the clamp body (3), and **in that** the mandrel, at the free end of the clamp body (3), has a pressure ring (20) adapted to provide a press engagement and to straighten up the tool or tools (4) against the flange (5) before the tools are clamp connected by pressurization of the pressure medium gap (10) of the clamp body (3).

4. Mandrel apparatus according to claim 3, **characterized in that** the pressure ring (20) is secured to the mandrel by means of a central tap screw (21) which is connected to the threaded bore (18) of the clamp body (11) by means of screw threads.

5. Mandrel apparatus according to claim 3, **characterized in that** the pressure ring (20) is secured to the mandrel by means of a pair of screws extending through the tool or tools (4), which screws are threaded into the transition part (1).

6. Mandrel apparatus according to claim 3, 4 or 5, **characterized in that** the tool (4), or the tool located closest to the transition part (1) is formed with a pair of follower pins (7) arranged to engage corresponding follower bores (6) of the transition part.

7. Mandrel apparatus according to any of claims 3 - 6, **characterized in that** the pressure ring (20) is formed with a rubber ring (22) which is partly embedded in said pressure ring (20) and which acts as a rubber spring when the tool or tools is/are pressed against the flange (5) of the transition part (1).

## Patentansprüche

1. Futtervorrichtung, die ein Festklemmen von Werkzeugen (4) in umlaufenden Werkzeugmaschinen gestattet, mit einer integralen Einheit, die Mittel zum Befestigen der Vorrichtung mit einem Ende in der Werkzeugmaschine aufweist, einem Übergangsteil (1) und einem Klemmkörper (3) zum Klemmverbinden des Werkzeugs (4), wobei
- die Vorrichtung als Futter ausgebildet ist, dessen Klemmkörper (3) eine hydraulische Klemmbuchse mit einer dünnen glatten Wandung (9), einen festen Futterkörper (11) und einen Spalt (10) aufweist, der zwischen der äußeren Wandung (9) und dem Futterkörper (11) angeordnet ist, wobei der Spalt mit einem hydraulischen Druckmedium (12) gefüllt ist, das bei Druckbeaufschlagung die Außenwandung (9) radial nach außen ausdehnt und dadurch das Werkzeug oder die Werkzeuge (4) klemmverbindet,
- der Futterkörper (11) in seinem Innenbereich Mittel (15, 17) zum Pressen des Druckmediums (12) in den Druckmedium-Spalt (10) sowie eine axiale Zentralöffnung (13) im Futterkörper (11) aufweist, die einen eine mit Druckmedium (12) gefüllte Druckmedium-Kammer (16) definierenden Druckkolben (15) aufweist und mit dem Druckmedium-Spalt (10) des Klemmkörpers (3) über eine oder mehrere Querkanäle (14) an einer Stelle nahe der Futterkörper-Öffnung (13) kommuniziert,
- und der Druckkolben (15) derart ausgebildet ist, daß er durch eine Druckeinrichtung (17) betätigbar ist, die derart ausgebildet ist, daß sie den Kolben (15) zum Erhöhen und Erniedrigen des Druckes des Druckmediums im vollständig umlaufenden Druckmedium-Spalt (10) in der Futterkörper-Öffnung (13) jeweils einwärts oder auswärts verschiebt,
**dadurch gekennzeichnet,**
- **daß** die glatte Wandung (9) als eine Außenwandung (9) ausgebildet ist, auf deren Außenfläche eine oder mehrere Werkzeuge aufschiebbar und festlegbar sind,
- **daß** der Futterkörper (11) als ein fester Innen-Futterkörper (11) ausgebildet ist, wobei die Zentralöffnung (13) von dem freien Ende der Vorrichtung aus zugänglich ist und
- **daß** die Druckeinrichtung von außerhalb der Vorrichtung durch das freie Ende des Klemmkörpers (3) zugänglich ist.

2. Futtervorrichtung nach Anspruch 1, **dadurch gekennzeichnet, daß** die Druckeinrichtung als drehbarer Kolben (15, 17) ausgebildet ist, der ein Gewinde aufweist und in ein Innengewinde (18) der Futterkörper-Öffnung (13) eingreift und der mit einer Verbindungsöffnung zum Eingriff eines Schraubwerkzeugs (19) ausgebildet ist, das durch das Ende der Futterkörper-Öffnung (13) einführbar ist und jeweils zum Anziehen und Lösen des Kolbens (15, 17) verwendet wird.

3. Futtervorrichtung nach Anspruch 1 oder 2, **dadurch gekennzeichnet, daß** der Übergangsteil (1) an dem Verbindungsende des Klemmkörpers (3) einen radialen Flansch (5) aufweist und daß das Futter am freien Ende des Klemmkörpers (3) einen Preßring (20) aufweist, um vor der Klemmverbindung der Werkzeuge durch Druckbeaufschlagung des Druckmedium-Spalts (10) des Klemmkörpers (3) einen Preßeingriff und eine Ausrichtung des Werkzeugs oder der Werkzeuge (4) zu schaffen.

4. Futtervorrichtung nach Anspruch 3, **dadurch gekennzeichnet, daß** der Preßring (20) an dem Futter durch eine zentrale Gewindeschraube (21) befestigt ist, die durch ein Schraubengewinde mit der Gewindeöffnung (18) des Klemmkörpers (11) verbunden ist.

5. Futtervorrichtung nach Anspruch 3, **dadurch gekennzeichnet, daß** der Preßring (20) an dem Futter über ein Paar von Schrauben befestigt ist, die durch das Werkzeug oder die Werkzeuge (4) hindurchgehen und in den Übergangsteil (1) eingeschraubt sind.

6. Futtervorrichtung nach Anspruch 3, 4 oder 5, **dadurch gekennzeichnet, daß** das Werkzeug (4) oder das dem Übergangsteil (1) am nächsten angeordnete Werkzeug mit einem Paar von Mitnehmerstiften (7) ausgebildet ist, die derart angeordnet sind, daß sie in zugehörige Mitnehmeröffnungen (6) des Übergangsteils eingreifen.

7. Futtervorrichtung nach einem der Ansprüche 3 - 6, **dadurch gekennzeichnet, daß** der Preßring (20) einen Gummiring (22) aufweist, der in dem Preßring (20) teilweise eingelassen ist und als Gummifederung wirkt, wenn das Werkzeug oder die Werkzeuge gegen den Flansch (5) des Übergangteils (1) gepreßt wird/werden.

## Revendications

1. Appareil de mandrinage pour permettre le blocage d'outils (4) dans des machines-outils rotatives, comprenant un ensemble solidaire comportant un moyen de montage du mandrin par son extrémité dans la machine-outil, une partie de transition (1) et un corps de blocage (3) pour fixer et bloquer le dit outil (4), dans lequel :
l'appareil est sous la forme d'un mandrin dans lequel le corps de blocage (3) est sous la forme d'un manchon de blocage hydraulique comportant une paroi mince et lisse (9) et un corps de mandrin plein (11), un intervalle (10) étant défini entre la dite paroi extérieure mince (9) et le corps de mandrin (11), cet intervalle étant. rempli d'un fluide de pression hydraulique (12) qui provoque, lorsqu'il est mis en pression, une expansion de la paroi extérieure (9) radialement vers l'extérieur de manière à fixer et bloquer le ou les dits outils (4),
le corps de mandrin (11) comporte intérieurement des moyens (15, 17) )pour la mise en pression du fluide de pression hydraulique (12) dans l'intervalle de fluide de pression (10), comprenant un alésage central axial (13) dans le corps de mandrin (11) qui contient un piston de pression (15) définissant une chambre de fluide de pression (16) qui est remplie de fluide de pression hydraulique (12) et qui communique avec l'intervalle de fluide de pression (10) du corps de blocage (3) par un ou plusieurs canaux transversaux (14) à un endroit proche de l'alésage (13) du corps de mandrin, et
le piston de pression (15) est agencé de manière à être actionné par un poussoir (17) qui est disposé pour déplacer le piston (15) vers l'intérieur ou l'extérieur dans l'alésage (13) du corps de mandrin afin d'engendrer ou de purger la pression, respectivement, du fluide de pression hydraulique dans l'intervalle de fluide de pression (10) s'étendant sur toute la périphérie,
**caractérisé en ce que**
la paroi lisse (9) est une paroi extérieure (9) sur la surface extérieure de laquelle on peut faire coulisser et on peut fixer un ou plusieurs outils,
le corps de mandrin (11) est un corps de mandrin intérieur plein (11) dont l'alésage central (13) peut être atteint à partir de l'extrémité libre de l'appareil, et
le poussoir peut être atteint de l'extérieur de l'appareil à travers l'extrémité libre du corps de blocage (3).

2. Appareil de mandrinage selon la revendication 1, **caractérisé en ce que** le poussoir est un piston rotatif (15, 17) qui est fileté et est en prise avec un filetage intérieur (18) de l'alésage (13) du corps de mandrin et qui comporte un trou de couplage pour l'accouplement d'une clé (19) prévue pour être introduite à travers l'extrémité de l'alésage (13) du corps de mandrin et utilisée pour le vissage et le dévissage, respectivement, du piston (15, 17).

3. Appareil de mandrinage selon la revendication 1 ou 2, **caractérisé en ce que** la partie de transition (1) comprend une bride radiale (5) à l'extrémité de jonction du corps de blocage (3), et **en ce que** le mandrin, à l'extrémité libre du corps de blocage (3), comporte un anneau de pression (20) prévu pour créer un contact de pression avec le ou les outils (4) et pour le ou les redresser contre la bride (5) avant que les outils soient fixés et bloqués par mise en pression de l'iritervalle de fluide de pression (10) du corps de blocage (3).

4. Appareil de mandrinage selon la revendication 3, **caractérisé en ce que** l'anneau de pression (20) est fixé au mandrin au moyen d'une vis à passage central (21) qui est connectée à l'alésage taraudé (18) du corps de blocage (11) au moyen d'un filetage.

5. Appareil de mandrinage selon la revendication 3, **caractérisé en ce que** l'anneau de pression (20) est fixé au mandrin au moyen de deux vis traversant le ou les outils (4), ces vis étant vissées dans la partie de transition (1).

6. Appareil de mandrinage selon la revendication 3, 4 ou 5, **caractérisé en ce que** l'outil (4), ou l'outil le plus proche de la partie de transition (1), comporte deux broches d'entraînement (7) prévue pour s'engager dans des trous d'entraînement correspondants (6) de la partie de transition.

7. Appareil de mandrinage selon une quelconque des revendications 3 à 6, **caractérisé en ce que** l'anneau de pression (20) comprend un anneau en caoutchouc (22) qui est partiellement encastré dans le dit anneau de pression (20) et qui agit comme un ressort en caoutchouc lorsque le ou les outils sont pressés contre la bride (5) de la partie de transition (1).
